# EUROPEAN PATENT APPLICATION

(11) **EP 3 822 716 A1**
(43) Date of publication of application: **19.05.2021**
(21) Application number: 20203796.6
(22) Date of filing: 26.10.2020
(51) Int. Cl.: G05B 15/02, G06F 3/044, H05B 6/12, F24C 7/08

(54) **CONTROL INTERFACE FOR AN APPLIANCE**

(30) Priority: 12.11.2019 IT 201900020874
(71) Applicant: ELICA S.p.A., 60044 Fabriano (AN) (IT)
(72) Inventor: CRISA', Fabrizio, 60044 Fabriano AN (IT)
(74) Representative: Perani & Partners S.p.A.

(57) **Abstract**

A control interface (1) for a household appliance comprises a panel (2) fixable to a household appliance (100), at least partly transparent and having an outer surface (2a) accessible to a user; input means (3) associated to the outer surface (2a) and configured to receive tactile inputs by a user; lighting means (6) placed behind the panel (2) and configured to generate one of more graphic symbols (5) on the outer surface (2a) through the panel (2); the lighting means (6) comprise at least a group (7) of active elements (8) configured to cooperate between each other and compose the graphic symbols (5), each graphic symbol (5) is defined by a plurality of active elements (8).

## Description

The present invention relates to a control interface for a household appliance. In particular, such interface may be inserted in any type of household appliance such as a cooking hob in particular of the induction type, a fume suction hood or still more.

In the prior art, control interfaces for household appliances are known. In particular, button or knob interfaces for cooking hobs have been known since these devices first appeared. Recently, control interfaces have incorporated lighting elements, such as control signals and icons, and touch controls for example of the capacitive type. These components have been combined for a long time, thus the known control interfaces can comprise a panel displaying screen printing or graphic symbols which can also be backlit when the appliance is operating.

Over the years, the functionalities of the appliances greatly increased. For example, in the modern induction hobs it is possible to adjust the power both depending on the time and temperature. Disadvantageously, control interfaces did not make similar progress and, in order to allow a full control by the user to all the appliance functions, they have become very complicated.

### SUMMARY OF THE INVENTION

In this context, the technical task underlying the present invention is to provide a control interface for a household appliance which overcomes the drawbacks of the prior art as described above.

In particular, it is the object of the present invention to make available a control interface for a household appliance that is simple to use and, at the same time, enabling a complete access to the appliance operating parameters.

The defined technical task and the specified objects are substantially achieved by a control interface for a household appliance comprising the technical characteristics set forth in one or more of the appended claims.

In particular, a control interface for a household appliance according to the present invention comprises a panel fixable to an appliance. Such panel is at least partly transparent, and has an outer surface accessible to a user.

Input means are associated to the outer surface, and are configured to receive tactile inputs by a user.

Lighting means are located behind the panel and are configured so as to generate one or more graphic symbols on the outer surface through the panel.

In particular, lighting means comprise a set of active elements configured to cooperate between each other and compose graphic symbols. Each graphic symbol is defined by a plurality of active elements.

Such device overcomes the technical problem in that by turning on a suitable combination of active elements it is possible to represent different graphic symbols in the same position depending on the appliance operation parameters. Consequently, the user is able to provide commands that are appropriate to the context in a simple way. Furthermore, not all the possible commands are required to be simultaneously displayed, as those that are not suitable for the appliance operative mode being in function may be hidden.

### LIST OF FIGURES

Further features and advantages of the present invention will become more apparent from the indicative and thus non-limiting description of a preferred, but non-exclusive, embodiment of a control interface for household appliances, as illustrated in the accompanying drawings, wherein:

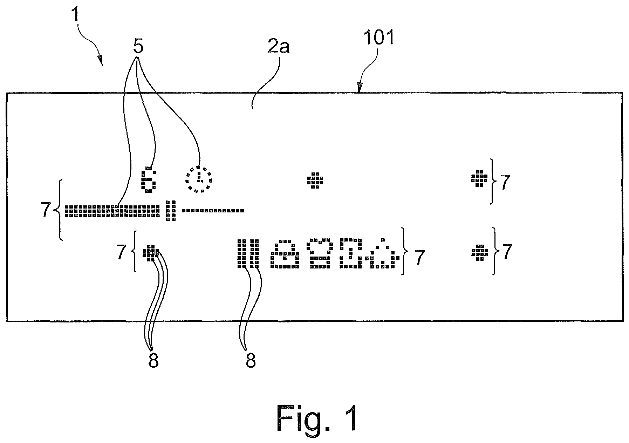

- Figure 1 is a front view of a control interface for household appliances according to the present invention;

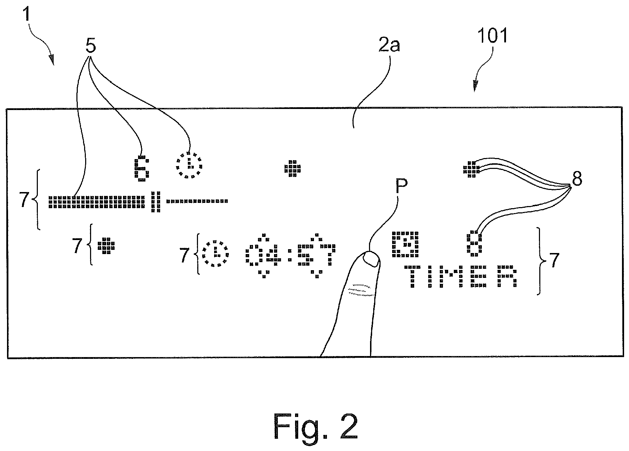

- Figure 2 is a front view of the control interface of Figure 1 in a different operating configuration;

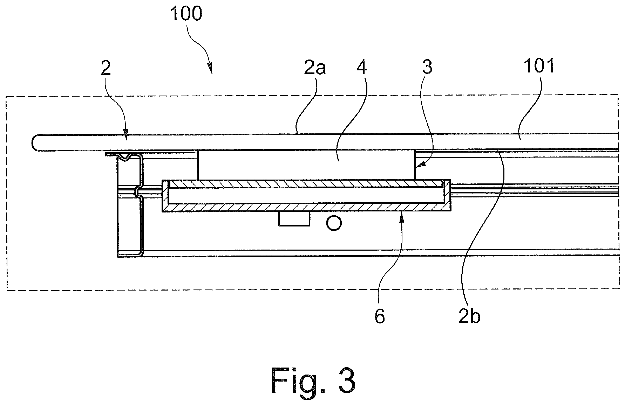

- Figure 3 is a section side view of a household appliance comprising the control interface of Figures 1 and 2; and

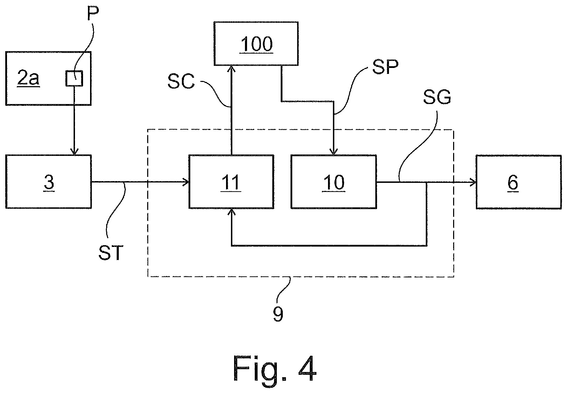

- Figure 4 is a schematic representation of the operation of the control interface of Figures 1 and 2.

### DETAILED DESCRIPTION

With reference to the enclosed drawings, 1 indicates a control interface for a household appliance 100 according to the invention.

According to the present invention, any type of household appliance 100 may employ the interface 1. For instance, the interface 1 may be employed in washing machines, tumble dryers, fridges, suction hoods and still more. In the following part of the present disclosure and in the enclosed figures reference will be specifically made to an induction hob, without however losing its general character. It must be noted that the interface 1 may be advantageously used in the design of new models of appliances or, equally advantageously, in restyling and updating models already existing on the market.

The interface 1 comprises a panel 2, which can be fixed to a household appliance 100. Within the context of the present invention, "fixed" means any type of irremovable connection adapted to functionally integrate the interface 1 with the household appliance 100. For merely exemplary purposes, they are considered as fixed elements connected by screws of mechanical joints, by snap-fitting and/or interference and/or gluing and/or in any other way known to the expert in the field. Elements fixed in a single piece, namely as a single component, must also be considered as fixed.

In the preferred embodiment of the invention, the panel 2 is integrated in the household appliance 100, namely made in a single piece with a portion of the household appliance itself. Advantageously, in case the household appliance 100 is an induction hob, the panel 2 may be defined as a portion of the outer panel 101 which is usually defined by a glass plate.

More generally, the panel 2 has an outer surface 2a accessible to a user. In the case of an induction hob, the outer surface 2a is preferably continuous with the surface of the outer panel 101 on which pans for cooking food are arranged. The panel 2 also has an inner surface 2b, opposite to the outer surface 2a and generally not accessible to a user.

It must be noted that the interface 1 is provided with input means 3, which are associated to the outer surface 2a of the panel 2. In greater detail, input means 3 are arranged such to receive tactile inputs by a user. In other words, input means 3 can be activated when the user touches the panel 2, in particular the outer surface 2a. In the preferred embodiment of the present invention input means 3 are formed of a capacitive film 4 placed in contact with the inner surface 2b of the panel 2, and capable of detecting the contact between the user and the outer surface 2a.

It is worth observing that, in the preferred embodiment of the interface 1, the panel 2 and in particular the outer surface 2a are totally lacking graphic symbols and/or text when the household appliance 100 is not in function, with the possible exception of symbols and/or indications required for safety norms or reasons such as, for merely exemplary purposes, a symbol identifying the switch-on button.

According to the present invention, the panel 2 of the interface 1 is at least partly transparent. In particular, the panel 2 has a transmittance preferably comprised between 30% and 80%, still more preferably comprised between 30% and 50%. Preferably, the panel 2 has a size comprised between 3 and 8 mm, in particular between 4 and 6 mm.

As above mentioned, the interface 1 does not generally provide that graphic symbols are made permanently on the panel 2. While being used, however, graphic symbols 5 are generated on the outer surface 2a of the panel 2. For this purpose, the interface 1 comprises lighting means 6 placed behind the panel 2, so that such graphic symbols 5 can be projected through the panel 2. In greater detail, the graphic symbols 5 may comprise functional drawings and/or icons and/or text and/or graphic elements such as for instance sliders, selectors, scroll bars et cetera.

In greater detail, lighting means 6 comprise at least a group 7 of active elements 8. The active elements 8 of each group 7 are configured such that they can cooperate between each other and compose the mentioned graphic symbols 5. It must be noted that each graphic symbol is generally defined by a plurality of such active elements 8.

In the preferred embodiment, each active element 8 is defined by a LED. Preferably, the LEDs 8 are configured to emit white light. Advantageously, each LED 8 has a brightness comprised between 30 and 120 mcd, in particular between 45 and 100 mcd, so that they are clearly visible through the panel 2 also with the daylight. Preferably, each LED 8 has a square or circular shape. Preferably, the LEDs 8 are selected so that they operate optimally at the temperature of 70°C.

According to the present invention, the interface 1 comprises a control unit 9 which is placed in signal communication with the input means 3 and with the lighting means 6. It is important to note that the control unit 9 is not necessarily integrated or adjacent to the panel 2, but may be placed at any position of the household appliance 100. In a particularly advantageous embodiment of the invention the control unit 9 is integrated in a control unit (not shown) of the household appliance 100. Preferably, in this case the control unit 9 is defined by a set of software modules which are executed on a hardware platform forming part of the household appliance 100.

In detail, the control unit 9 comprises an output module 10. Such output module 10 is placed in signal communication with the lighting means 6, such to define the mentioned graphic symbols 5 as a function of one or more operating parameters of the household appliance 100. For merely exemplary purposes, in the case of a cooking hob the operating parameters may be activating or deactivating each cooking area, the desired or real temperature of a pan placed in a defined cooking area, the desired or real duration of the activation of the cooking area and more. In greater detail, the output module 10 acquires a signal "SP" representing the operating parameters that are relevant for the specific status of the household appliance 100. The output module thus outputs a signal "SG" representative of the graphic signals 5 to be displayed. Such signal "SG" is received by the group 7 of active elements 8 and results in the switching on of a specific combination of the mentioned active elements 8, which compose the required graphic symbols 5.

The control unit 9 further comprises an acquisition module 11, which is configured to acquire a contact signal "ST" output in particular by input means 3 and representing the position of at least a contact point "P" touched by the user on the outer surface 2a of the panel 2. Furthermore, the acquisition module 11 receives the signal "SG" produced by the output module 10, indicating the type of graphic symbols 5 displayed and their position on the outer surface 2a of the panel 2. The acquisition module 11 is therefore configured to generate a command signal "SC" which is variable as a function of the contact signal "ST" and graphic symbols 5 displayed. Advantageously, this enables the user to touch the same position on the panel 2 in different contexts and, as a result, send different commands as a function of the operating context of the household appliance 100.

## Claims

1. A control interface (1) for household appliances, **characterized in that** it comprises
- a panel (2) fixable to a household appliance (100), at least partly transparent and having an outer surface (2a) accessible to a user;
- input means (3) associated with said outer surface (2a) and configured to receive tactile inputs by a user;
- lighting means (6) located behind said panel (2) and configured to generate one or more graphic symbols (5) on said outer surface (2a) through said panel (2);
**characterized in that** said lighting means (6) comprise at least one group (7) of active elements (8) configured to cooperate with each other and compose said one or more graphic symbols (5), each graphic symbol (5) being defined by a plurality of said active elements (8).

2. The interface (1) according to the preceding claim, **characterized in that** it comprises a control unit (9) placed in signal communication with said input means (3) and with said lighting means (6), said control unit (9) comprising an output module (10) placed in signal communication with said lighting means (6) and configured to define said graphic symbols (5) as a function of one or more operating parameters of said household appliance (100); an acquisition module (11) configured to acquire a contact signal (ST) representing the position of at least one contact point (P) touched by the user on said outer surface (2a) and to generate a command signal (SC) variable according to said contact signal (ST) and graphic symbols (5) present on the outer surface (2a).

3. The interface (1) according to any one of the preceding claims, **characterized in that** said panel (2) has a transmittance comprised between 30% and 80%, preferably comprised between 30% and 50%.

4. The interface (1) according to any one of the preceding claims, **characterized in that** said panel (2) is made as a single piece with a glass plate of said household appliance (100).

5. The interface (1) according to any one of the preceding claims, **characterized in that** said panel (2) has an inner surface (2b) opposite to said outer surface (2a), said input means (3) comprising a capacitive film (4) placed in contact with said inner surface (2b).

6. The interface (1) according to any one of the preceding claims, **characterized in that** each active element (8) is defined by a LED.

7. The interface (1) according to the preceding claim, **characterized in that** said LEDs (8) are configured to emit white light.

8. The interface (1) according to claim 6 or 7, **characterized in that** each LED (8) has a brightness comprised between 30 and 120 mcd, in particular between 45 and 100 mcd.

9. A household appliance (100), in particular an induction hob, comprising an interface according to any one of the preceding claims.
